# EUROPEAN PATENT APPLICATION

(11) **EP 2 241 478 A1**
(43) Date of publication of application: **20.10.2010**
(21) Application number: 10380028.0
(22) Date of filing: 02.03.2010
(51) Int. Cl.: B60Q 1/04

(54) **Automobile light mounting system**

(30) Priority: 02.03.2009 ES 200900404 U
(71) Applicant: Seat, S.A., 08760 Martorell (ES)
(72) Inventor: Lobo Rabadan, José Luis, 08760 Martorell - Barcelona (ES); Sanchez Tebar, Irma, 08760 Martorell - Barcelona (ES); Gama Santamaria, Jordi, 08760 Martorell - Barcelona (ES)
(74) Representative: Carvajal y Urquijo, Isabel

(57) **Abstract**

Light mounting system in the frontal structure (1) of automobiles, comprising elastically retractile anchorages (3) for fixing the light (2) to the automobile frontal structure (1). The anchorages (3) comprise means (11) to regulate the position of the light and elastic support means (5) in the direction opposite to the vehicle travel direction, with stops (8) limiting the displacement of said supports. The anchorages (3) enable, in case of an impact on the light (2), the displacement of said light (2) towards the interior of the engine hole and the recovery of its original position, once there is no more pressure on the light (2).

## Description

### FIELD OF THE INVENTION

The present invention refers to an automobile light mounting system, and more particularly to a system for mounting the lights in the frontal structure of the vehicle, which enables to avoid or at least reduce the number of light breaks due to an impact thereon.

### BACKGROUND OF THE INVENTION

Automobile lights are mounted on the frontal structure thereof through rigid anchoring, which prevents the light movement, and all this secures its position, once mounted and regulated. In order to be able to regulate this position, light anchorages have an adjusting screw, which enables to correctly direct the light, but which will fix the selected position, immobilizing it.

In current automobile design, many of them present a frontal line in which the lights and bumper are located almost inline. This entails that when small bumps occur between vehicles, for example when parking, the lights suffer an impact which can produce the breaking of the lampshade.

### DESCRIPTION OF THE INVENTION

The object of the present invention is to eliminate the aforementioned problem, through an automobile light mounting system which produces the retraction thereof, when they suffer an impact, thus eliminating or reducing their risk of breaking.

According to the system of the invention, the fixing of the lights to the frontal structure of the vehicle is carried out by elastically retractile anchorages, which enable, in case of an impact on the light, the displacement thereof towards the interior of the engine hole and the recovery of their initial position, once there is no more pressure on the light.

The elastically retractile anchorages comprise means to regulate the light position and elastic support means in the opposite direction to the vehicle travel direction, said elastic means which comprise stops limiting the displacement of the supports.

The light will be preferably mounted with three elastically retractile anchorages, arranged at a hundred and twenty degrees from one another. The fixing will be carried out through pins or lugs laterally protruding from the light casing.

The aforementioned elastic support means comprise a box which is integral to the vehicle frontal structure, inside which a spring is mounted which can be compressed in a direction parallel to the vehicle axle and which is mounted between the rear wall of said box and a front moving wall. The box also has mounted on it, outside the front wall and between two of its lateral walls, a front locking pin which acts as a stop limiting the moving wall displacement in the direction of the vehicle movement. The front moving wall is attached to the corresponding pin of the light, through regulating means.

These regulating means comprise a set screw to fix the light pin to the moving wall of the elastic support means and a silent block which is arranged between said screws and moving wall.

With the mounting system described, when there is a bump on a light, said light moves towards the interior of the engine hole or opening, in a direction opposite to the vehicle travel direction, until it occupies a retracted position with respect to the frontal bumper, which will be the element which finally cushions the bump, thus eliminating or reducing the risk of breaking for the light lampshade.

The light mounting system of the invention is especially effective in case of small bumps, which normally occur during parking operations, but which can cause the breaking of the lights, due to their position in a great number of automobile models and all this by making the light not integral to and rigid with the frontal structure, but rather partially retractable with respect thereto, which enables them to be located outside the impact area, in case of bumps.

With the light mounting system of the invention, the position of the lights and the correct directing thereof is attained by the regulating means described, keeping the light in its nominal position, the spring housed in the boxes, boxes which can be inserted in the frontal structure, integral thereto, or which can be a part thereof.

The spring housed in the boxes of the elastic support means will be calibrated, so that the break strength of the light will be higher than the spring deformation strength.

### BRIEF DESCRIPTION OF THE DRAWINGS

The attached drawings show a form of mounting lights in an automobile frontal structure, according to the system of the invention which is presented as a non-limiting example thereof, where:
Figure 1 is an elevated frontal view of an automobile frontal structure, with one of the lights mounted.
Figure 2 is a perspective higher-scale view of the same light as that of figure 1, with the elastically retractile anchorages through which it is mounted in the frontal structure.
Figure 3 is a vertical partial sectional view of one of the lights with one of the anchorages, taken according to the cutting line III-III of figure 2.
Figure 4 is a perspective view of one of the anchorages, through which the light is fixed to the automobile frontal structure.
Figures 5 to 7 correspond to vertical sections of one of the lights and the automobile frontal structure, in different light retraction positions, taken according to the cutting line V-V of figure 1.

### DETAILED DESCRIPTION OF AN EMBODIMENT

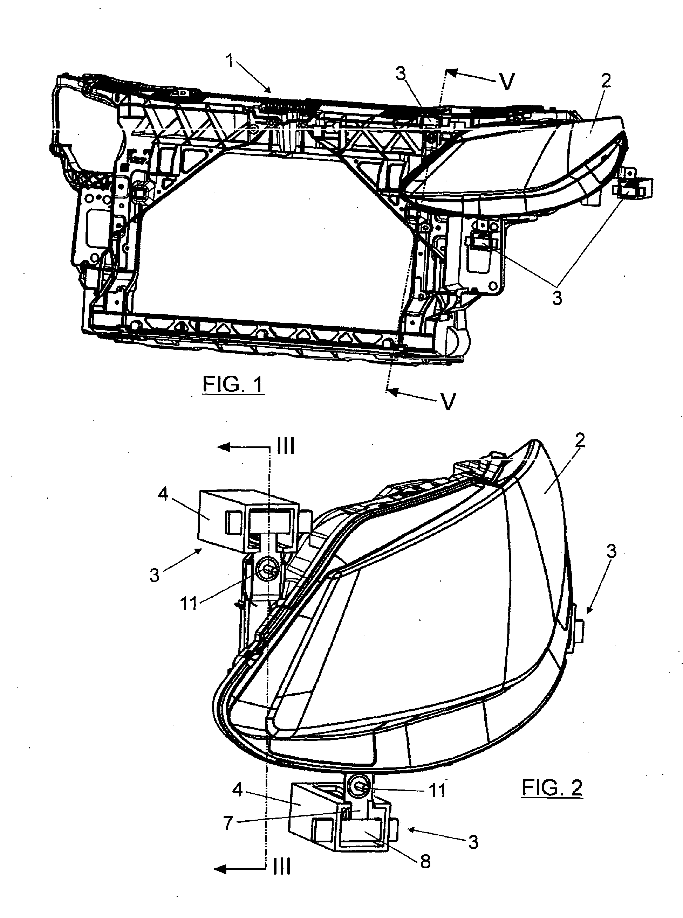

Figure 1 is an elevated frontal view of an automobile frontal structure, generally indicated by number 1, on which there are mounted, in its upper part, the automobile lights 2, one of which is represented.

The mounting of these lights on the frontal structure 1, according to the system of the invention, is carried out through elastically retractile anchorages 3, preferably three of them arranged at one hundred and twenty degrees between one another. These elastically retractile anchorages enable the light displacement in a direction parallel to the vehicle axle, so that if there is an impact against them, they retract towards the interior of the engine hole.

Each one of these elastically retractile anchorages comprises means to regulate the position of the light and elastic support means in the opposite direction to the travel direction of the vehicle.

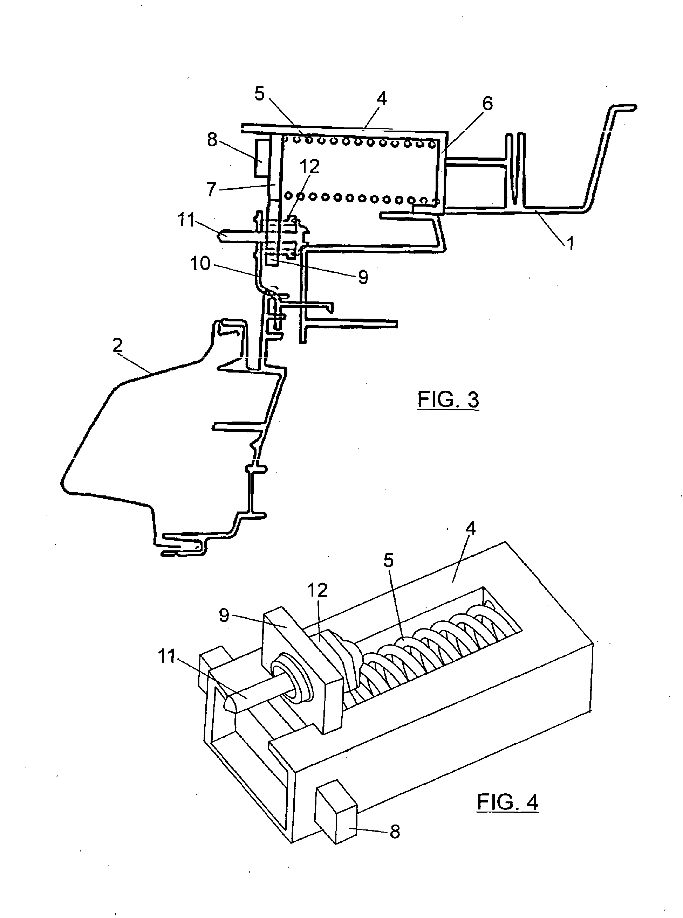

The aforementioned elastic support means include a box 4 which, as it can be seen better in figure 3, is integral to the vehicle frontal structure 1. This box 4 houses a spring 5 which can be compressed in a direction parallel to the vehicle axle and which is mounted between a fixed rear wall 6 of the box and a frontal parallel wall 7 which can move in a direction parallel to the vehicle axle. The displacement of this moving wall 7 in the direction of the vehicle is limited by a locking pin 8 which is mounted between two of the longitudinal opposite walls of the box 4, outside the moving wall 7.

The moving wall 7 protrudes from the box 4 in a section 9 to which the light 2 is fixed, through the corresponding lug 10 thereof, fixing which is carried out by a screw 11 and a silent block 12 mounted between the screw head 10 and the wall 7.

Figures 3 and 4 clearly show the different components described above, both of the elastic means, comprising the box 4, spring 5 and moving wall 7, and the regulating means, constituted by the screw 11 and the silent block 12.

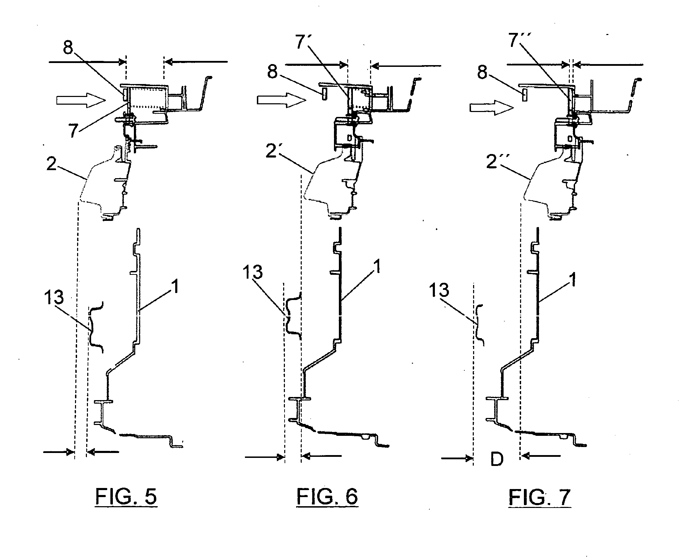

Figure 5 shows the position occupied by the light 2, in a resting situation, with respect to the frontal structure 1 and the frontal bumper 13, in many automobile models. As it can be seen, the light 2 partially protrudes from the bumper 13, so that in case of a frontal impact, the light 2 will receive the effect thereof, before the bumper13.

Because of the light mounting system of the invention, when they receive an impact they move in a direction opposite the vehicle direction, towards the interior of the engine hole, being able to occupy an intermediate partial retraction position, which is indicated by number 2' in figure 6, or a position of maximum retraction, indicated by number 2" in figure 7, in which the light is moved towards the interior of the vehicle, behind the bumper 13, so that it will be the bumper the one that suffers the effect of the impact and not the light 2, due to the possibility of retraction towards the vehicle interior. In the positions of figures 6 and 7, the front moving wall occupies positions 7' and 7", until the total compression of the spring 5.

As it was indicated, the spring tension 5 will be calibrated so that it is lower than the tension or break energy of the light. The extent of the total displacement of the light D, figure 7, will be enough so that it can reach a retraction position in which it is located behind the bumper crossbeam 13.

As it can be seen in figures 5 to 7, the position of the front locking pin 8 is fixed, in order to limit the frontal displacement 7 in the direction of the vehicle, as represented in figure 5.

In short, the light mounting system of the invention is based on fixing the lights through elastically retractile anchorages comprising elastic support means and regulating means, said elastic means which comprise the front moving wall 7, the spring 5, the box 4 and the front locking pin 8. The front moving wall 7 is mounted between two opposite longitudinal walls of the box, with only one degree of freedom, along it, in a direction parallel to the vehicle axle.

From the light retraction, in the position shown in figure 7, when the pressure thereon stops, the spring 5 will cause the light to recover and maintain its original nominal position; tightened by the regulating means constituted by the screw 11 and the silent block 12.

## Claims

1. Automobile light mounting system in the frontal structure of automobiles, **characterized in that** it comprises fixing the light to the automobile frontal structure through elastically retractile anchorages which enable, in case of an impact on the light, the displacement of said light towards the interior of the engine hole and the recovery of its original position, once there is no more pressure on the light; said anchorages which comprise means to regulate the position of the light and elastic support means in the direction opposite to the vehicle travel direction, with stops limiting the displacement of said supports.

2. System according to claim 1, **characterized in that** it comprises three elastically retractile anchorages, arranged at one hundred and twenty degrees from one another, to which the light is fixed through pins protruding from said light.

3. System according to claim 1, **characterized in that** the elastic support means comprise a box integral to the vehicle frontal structure, a spring which can compress in a direction parallel to the vehicle axle which is mounted inside the box between a rear fixed wall and a front moving wall, and a front locking pin mounted, outside the front wall, between two of the longitudinal opposite walls of the box, acting as a stop limiting the displacement of the moving wall in the direction of the vehicle; to the front moving wall of which there is fixed the pin of the light, through the regulating means.

4. System according to claim 1, **characterized in that** the regulating means comprise a set screw of the light pin to the moving wall of the elastic support means and a silent block arranged between said screw and moving wall.
